(19) Europäisches Patentamt
European Patent Office
Office européen des brevets

(11) **EP 3 321 786 A1**

(12) **EUROPEAN PATENT APPLICATION**
published in accordance with Art. 153(4) EPC

(43) Date of publication:
**16.05.2018 Bulletin 2018/20**

(51) Int Cl.:
***G06F 3/044*** (2006.01)

(21) Application number: **16901163.2**

(22) Date of filing: **17.09.2016**

(86) International application number:
**PCT/CN2016/099158**

(87) International publication number:
**WO 2018/049638 (22.03.2018 Gazette 2018/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Shenzhen Goodix Technology Co., Ltd.**
**Shenzhen, Guangdong 518045 (CN)**

(72) Inventors:
• **GUI, Xintao**
**Shenzhen**
**Guangdong 518045 (CN)**

• **CHEN, Xiaoxiang**
**Shenzhen**
**Guangdong 518045 (CN)**
• **ZHONG, Xiang**
**Shenzhen**
**Guangdong 518045 (CN)**

(74) Representative: **Fabiano, Piero**
**Fabiano, Franke & MGT Sagl**
**Riva Caccia 1D P.O. Box 142**
**6900 Lugano (CH)**

(54) **PRESSURE DETECTION METHOD, TOUCH CONTROL CHIP AND PRESSURE DETECTION MODULE**

(57) The present disclosure relates to the field of data processing technologies, and discloses a pressure detection method, a touch control chip, and a pressure detection module. In the present disclosure, the pressure detection method includes: using a pressure sensing layer to sense multiple values of pressure parameter variation generated by a user's pressing operation; generating multiple feature values according to the multiple values of pressure parameter variation; selecting at least one feature value from the multiple feature values as a current feature value; obtaining a predetermined relationship between feature value of a current sensing unit and pressure from predetermined relationships between multiple feature values of the sensing units and pressures; and calculating a current pressure corresponding to the current feature value according to the predetermined relationship between feature value of the current sensing unit and pressure. The present disclosure further provides the touch control chip and the pressure detection module. According to the present disclosure, an original touch control chip can be used to detect a pressure, so as to precisely detect the pressure without adding an extra control chip.

Fig. 4

Start

Sensing, by the pressure sensing layer, multiple values of pressure parameter variation generated by a user's pressing operation — 401

generating multiple feature values according to the values of multiple pressure parameter variation — 402

selecting at least one feature value from the multiple feature values as a current feature value — 403

obtaining a predetermined relationship between feature value of a current sensing unit and pressure from predetermined relationships between multiple feature values of the sensing units and pressures — 404

calculating a current pressure corresponding to the current feature value according to the predetermined relationship between feature value of the current sensing unit and pressure — 405

detecting, by using the substrate having the position detection function, a current pressed position, which generated by the user's pressing operation — 406

obtaining a predetermined relationship from predetermined relationships between pressed areas of the multiple sensing units and correction parameters. The predetermined relationship is between pressed area and correction parameter, the pressed area corresponds to the current sensing unit — 407

obtaining a current correction parameter according to the predetermined relationship between pressed areas and correction parameters. The current correction parameter corresponds to the current pressed position — 408

correcting the calculated current pressure according to the current correction parameter — 409

End

## Description

### TECHNICAL FIELD

The present disclosure relates to the field of data processing technologies, and in particular, to a pressure detection method, a touch control chip, and a pressure detection module.

### BACKGROUND

Mobile electronic devices bring much convenience for a daily life and work, and have become indispensable tools. There are multiple input apparatuses applied to mobile electronic devices, for example, keys, mice, joysticks, laser pointers, and touch screens. A touch technology is rapidly applied to various electronic devices because of their good interactivity. The touch technology has being gradually mature and various possible applications based on the touch technology have been fully developed.

With the development of technologies, users' requirements on operation experience for electronic devices such as mobile phones or tablet computers get higher, and users expect more convenient man-machine interaction experience. Based on position information provided in the touch technology, another dimension of information, that is, information about intensity of pressure, is added in a pressure detection technology. Various applications may be developed based on inputted pressure information, to bring entirely new operation experience for people during use of the electronic devices. For example, a drop-down list or a "small ball" pops up after a screen is pressed, and heavy pressure speeds up scrolling of a page up and down or right and left as well as tactile feedback.

Currently, a technology of embedding a pressure detection apparatus in a mobile electronic device is still in an exploring or developing stage. In some pressure detection solutions on the market, multiple pressure sensors need to be disposed on the edge of an electronic device such as a mobile phone or a tablet computer. These solutions are of high costs and may increase the thickness of the device.

### SUMMARY

Embodiments of the present disclosure provide a pressure detection method, a touch control chip, and a pressure detection module. Therefore, an original touch control chip can be used to detect a pressure, so as to precisely detect the pressure without adding an extra control chip.

To solve the foregoing technical problems, the embodiments of the present disclosure provide a pressure detection method, which including: sensing, by a pressure sensing layer, multiple values of pressure parameter variation generated by a user's pressing operation, wherein the multiple values of pressure parameter variation are respectively generated by multiple sensing units of the pressure sensing layer; generating multiple feature values according to the multiple values of pressure parameter variation; selecting at least one feature value from the multiple feature values as a current feature value, wherein a value of pressure parameter variation corresponding to the current feature value is generated by a current sensing unit; obtaining a predetermined relationship between feature value of the current sensing unit and pressure, from predetermined relationships between multiple feature values of the sensing units and pressures; and calculating a current pressure corresponding to the current feature value according to the predetermined relationship between the feature value of the current sensing unit and pressure.

The embodiments of the present disclosure further provide a touch control chip, applied to the foregoing pressure detection method. The touch control chip includes a driving unit, at least one detection unit, and a calculation unit. The driving unit is configured to connect to an input end of the pressure sensing layer. The detection unit is configured to connect to an output end of the pressure sensing layer; and the detection unit is configured to: receive the multiple values of pressure parameter variation, and generate the multiple feature values according to the multiple values of pressure parameter variation. An input end of the calculation unit is connected to an output end of the detection unit; the calculation unit is configured to select at least one feature value from the multiple feature values as a current feature value; and the calculation unit is further configured to: obtain a predetermined relationship between feature value of the current sensing unit and pressure, from predetermined relationships between multiple feature values of the sensing units and pressures; and calculate a current pressure corresponding to the current feature value, according to the predetermined relationship between feature value of the current sensing unit and pressure.

The embodiments of the present disclosure further provide a pressure detection module, which includes a pressure sensing layer, a substrate having a position detection function, and the forgoing touch control chip. The pressure sensing layer is disposed under the substrate having the position detection function, and the pressure sensing layer includes the multiple sensing units. The driving unit is connected to an input end of the substrate having the position detection function and input ends of the multiple sensing units of the pressure sensing layer. An input end of the detection unit is connected to output ends of the multiple sensing units of the pressure sensing layer. The calculating unit is further connected to an output end of the substrate having the position detection function.

Compared with the existing art, in the embodiments of the present disclosure, the pressure sensing layer is additionally disposed on a lower surface of the substrate having the position detection function, and the touch control chip is used to analysis the values of pressure parameter variation sensed by the pressure sensing layer, to implement a pressure detection function. Therefore, a function of precisely detecting a pressure is implemented without adding an extra control chip, thereby avoiding a problem of adding pressure detection function with the electronic device's thickness increase.

In addition, the predetermined relationship between feature value of the current sensing unit and pressure is expressed by using a formula, and the formula is

$$Rawdata == \frac{a}{\sqrt{1+\left(b+\dfrac{c}{d-F}\right)^2}}.$$

Wherein *Raw Data* stands for the current feature value, *F* stands for the current pressure, *a, b, c,* and *d* are all constants. That is, a first specific manner for calculating the current pressure according to the current feature value is provided.

In addition, the calculating a current pressure corresponding to the current feature value, according to the predetermined relationship between the feature value of the current sensing unit and pressure, includes: comparing the current feature value with predetermined multiple feature value intervals to obtain a lower boundary feature value and an upper boundary feature value of a feature value interval to which the current feature value belongs; obtaining a lower boundary pressure corresponding to the lower boundary feature value and an upper boundary pressure corresponding to the upper boundary feature value according to a predetermined mapping list of pressure and boundary feature value; and calculating the current pressure by using a linear approximation method, wherein a linear approximation calculation

$$F = F_i + step * \frac{y_i - y}{y_i - y_{i+1}}$$

formula includes: and *step*=$F_{i+1}$-$F_i$. Wherein, *F* stands for the current pressure, $F_i$ and $F_{i+1}$ stand for the lower boundary pressure and the upper boundary pressure respectively, $y_i$ and $y_{i+1}$ stand for the lower boundary feature value and the upper boundary feature value respectively, and *y* stands for the current feature value. That is, a second specific manner of calculating the current pressure according to the current feature value is provided. Compared with the first manner, in the second manner, complex operations (operations such as squaring, root extracting, and the like are involved in the foregoing formula) performed by the touch control chip can be avoided, thereby relatively increasing a speed and reducing a burden of processing of the touch control chip.

In addition, in the mapping list of pressure and boundary feature value, pressure differences between lower boundary pressures corresponding to lower boundary feature values of the feature value intervals and upper boundary pressures corresponding to upper boundary feature values of the feature value intervals are equal, so as to facilitate calculation by using the linear approximation method.

In addition, the pressure detection method further includes: detecting, by using a substrate having a position detection function that is disposed above the pressure sensing layer, a current pressed position generated by the user's pressing operation; obtaining a predetermined relationship between press area corresponding to the current sensing unit and correction parameter, from predetermined relationships between press areas of the multiple sensing units and correction parameters; obtaining a current correction parameter corresponding to the current pressed position, according to the predetermined relationship between press area corresponding to the current sensing unit and correction parameter; and correcting the current pressure according to the current correction parameter. A deformation degree in an edge area is less than that in the central area in a case of a same pressing strength. That is, when different positions are pressed, deformation degrees for a same sensing unit may be different. Therefore, correcting the current pressure according to the foregoing manner, so as to enable a detected pressure at different positions to have good consistency, thereby avoiding a condition that detection results for a same pressure in different press areas are inconsistent because of a deformation difference in the different press areas.

In addition, there is one current feature value, and the current feature value is a feature value having a maximum absolute value of the multiple feature values. Performing calculation only by using the feature value having the maximum absolute value can significantly simplify an operation of the touch control chip and reduce a burden of processing. In addition, because a value of pressure parameter variation corresponding to the feature value having the maximum absolute value is substantially generated by a sensing unit relatively close to a current pressed position, a current pressure calculated according to the feature value having the maximum absolute value is relatively precise.

**BRIEF DESCRIPTION OF THE DRAWINGS**

Fig. 1 is a flowchart of a pressure detection method according to a first embodiment of the present disclosure;

Fig. 2 is a *Raw Data-Force* curve graph corresponding to a central position of a sensing unit according to the first embodiment of the present disclosure;

Fig. 3 is a flowchart of a pressure detection method according to a second embodiment of the present disclosure;

Fig. 4 is a flowchart of a pressure detection method according to a third embodiment of the present disclosure;

Fig. 5 is a schematic diagram of a capacitance sensing layer according to the third embodiment of the present disclosure;

Fig. 6 is an *R-F* curve graph for a sensing unit S4 in Fig. 5 at different positions in column 6;

Fig. 7a shows ratios of deformation correction coefficients in S4 when different positions in a same row are pressed to a deformation correction coefficient in S4 when S4 is pressed;

Fig. 7b shows ratios of deformation correction coefficients in S4 when different positions in a same column are pressed to a deformation correction coefficient in S4 when S4 is pressed;

Fig. 8a is a schematic diagram of a first circuit structure of a touch control chip according to a fourth embodiment of the present disclosure;

Fig. 8b is a schematic diagram of a second circuit structure of the touch control chip according to the fourth embodiment of the present disclosure;

Fig. 8c is a schematic diagram of a third circuit structure of the touch control chip according to the fourth embodiment of the present disclosure;

Fig. 9a is a schematic diagram of a first position relationship between a display unit and a capacitance sensing layer according to a fifth embodiment of the present disclosure;

Fig. 9b is a schematic diagram of a second position relationship between the display unit and the capacitance sensing layer according to the fifth embodiment of the present disclosure;

Fig. 9c is a schematic diagram of a third position relationship between the display unit and the capacitance sensing layer according to the fifth embodiment of the present disclosure;

Fig. 9d is a schematic diagram of a position relationship between the display unit and a resistance sensing layer according to the fifth embodiment of the present disclosure;

Fig. 10a is a schematic diagram of a touch panel to which no pressure is applied according to the fifth embodiment of the present disclosure; and

Fig. 10b is a schematic deformation diagram of a touch panel to which a pressure is applied according to the fifth embodiment of the present disclosure.

**DETAILED DESCRIPTION**

In order to make the objects, technical solutions and advantages of the present disclosure clearer, some of embodiments of the present disclosure will be further described in details hereinafter with reference to the drawings. However, it should be understood by person skilled in the art that in some embodiments of this patent application, plenty of technical details are described to make this application easier to be understood. However, the technical solutions sought to be protected by the claims of this patent application may be implemented even without the technical details and the changes and modification made based on some of embodiments below.

A first embodiment of the present disclosure relates to a pressure detection method, which applied to a pressure detection module. In this embodiment, the pressure detection module includes a pressure sensing layer, a substrate having a position detection function, and a touch control chip. The pressure sensing layer is disposed under the substrate having the position detection function, and the pressure sensing layer includes multiple sensing units. The touch control chip is connected to the pressure sensing layer and the substrate having the position detection function. This embodiment sets no limit to the pressure detection module.

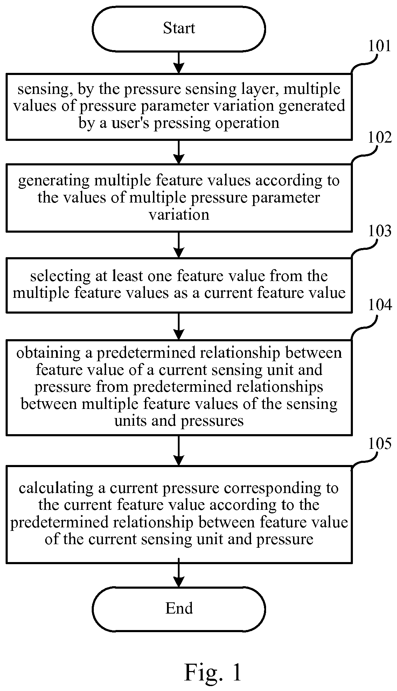

As shown in Fig. 1, Fig. 1 is a flowchart of a pressure detection method according to the first embodiment of the present disclosure. Specific descriptions are provided below.

Step 101: sensing, by a pressure sensing layer, multiple values of pressure parameter variation generated by a user's pressing operation.

Specifically, the touch control chip outputs a drive signal to the pressure sensing layer. When the user presses the substrate having the position detection function, the substrate having the position detection function drives the pressure sensing layer to deform, so as to change the values of pressure parameter variation outputted by the pressure sensing layer. The pressure sensing layer includes multiple sensing units. Therefore, actually, by using the pressure sensing layer, the touch control chip senses multiple values of pressure parameter variation generated by the multiple sensing units. When the user presses the substrate having the position detection function, the values of different pressure parameter variation reflect deformation degrees in different areas of the substrate having the position detection function.

The pressure sensing layer may be a capacitance sensing layer or a resistance sensing layer.

When the pressure sensing layer is a capacitance sensing layer, the value of pressure parameter variation is a value of capacitance variation. Specifically, if the substrate having the position detection function is a touch panel, the value of pressure parameter variation is a variation value of a coupling capacitance between the capacitance sensing layer and a metal middle frame for fixing the touch panel. If the substrate having the position detection function is a touch screen, the pressure detection module further includes a display unit, and the display unit is disposed between the capacitance sensing layer and the touch screen. In this case, the value of pressure parameter variation is the sum of a variation value of a coupling capacitance between the capacitance sensing layer and a metal middle frame and a variation value of a coupling capacitance between the capacitance sensing layer and the display unit. Wherein, the metal middle frame is configured to fix the touch screen and the display unit.

When the pressure sensing layer is a resistance sensing layer, the value of pressure parameter variation is a value of resistance variation caused by deformation of the resistance sensing layer. If the substrate having the position detection function is a touch panel, the resistance sensing layer is disposed on a lower surface of the touch panel. If the substrate having the position detection function is a touch screen, the pressure detection module further includes a display unit, and the display unit may be disposed between the resistance sensing layer and the touch screen, or the resistance sensing layer may be disposed between the display unit and the touch screen.

Step 102: generating multiple feature values according to the values of multiple pressure parameter variation.

Specifically, before the user performs pressing, each sensing unit outputs a basic pressure parameter. For example, when the pressure sensing layer is a capacitance sensing layer, the basic pressure parameter is a basic coupling capacitance; when the pressure sensing layer is a resistance sensing layer, the basic pressure parameter is basic resistance. The touch control chip generates a basic feature value corresponding to the basic pressure parameter according to the basic pressure parameter. When the user performs pressing, each sensing unit outputs a measured pressure parameter, and the touch control chip generates a measured feature value according to the measured pressure parameter. Therefore, a feature value corresponding to a value of pressure parameter variation is a difference between the measured feature value and the basic feature value. The basic pressure parameter outputted by each sensing unit may be equal or may be not equal (which is determined by a structure). When the basic feature value outputted by each sensing unit is 0 (that is, the basic pressure parameter is 0), the measured pressure parameter is equal to the value of pressure parameter variation. That is, the feature value corresponding to the value of pressure parameter variation is a measured feature value calculated directly by using the measured pressure parameter.

In this embodiment, amplifying processing, filtering processing, and demodulation processing may be sequentially performed on the measured pressure parameter, so as to obtain a measured feature value corresponding to the measured pressure parameter (similar to a manner of generating the basic feature value). When the basic feature value outputted by each sensing unit is 0 (that is, the basic pressure parameter is 0), it may be considered that the feature value corresponding to the value of pressure parameter variation is obtained by sequentially performing amplifying processing, filtering processing, and demodulation processing on the value of pressure parameter variation. This embodiment sets no limit to the processing performed on a measured pressure parameter.

Step 103: selecting at least one feature value from the multiple feature values as a current feature value.

A value of pressure parameter variation corresponding to the current feature value is generated by a current sensing unit.

In this embodiment, preferably, the following two implementing manners may be included. In a first implementing manner, there is one current feature value, and the current feature value is a feature value having a maximum absolute value of the multiple feature values. That is, a current pressure is calculated according to the feature value having the maximum absolute value. Performing calculation only by using one feature value can significantly simplify an operation of the touch control chip and reduce a burden of processing. In addition, the current pressure calculated according to the feature value having the maximum absolute value is relatively more precise. The reasons are as follows: on the substrate having the position detection function, a deformation degree at a position that is pressed by the user is relatively greater than a position that is not, resulting in a larger deformation in a corresponding area of the pressure sensing layer. In this case, a value of pressure parameter variation outputted by a sensing unit in the corresponding area is relatively larger and a corresponding feature value is relatively larger. Therefore, a larger feature value indicates that a sensing unit generating a value of pressure parameter variation is closer to a pressed position.

In a second implementing manner, there are multiple current feature values. That is, a current pressure is calculated according to all feature values. But this embodiment sets no limit to how many feature values are deployed to calculate the current pressure. In another embodiment, a current pressure may be calculated according to several feature values, that is, more than one feature value but not all feature values.

Step 104: obtaining a predetermined relationship between feature value of a current sensing unit and pressure from predetermined relationships between multiple feature values of the sensing units and pressures.

When a same pressure acts on the substrate having the position detection function, deformation degrees in different areas of the substrate are different. However, the sensing units correspond to different areas of the substrate. Therefore, the predetermined relationships between feature value of each the sensing unit and pressure are different.

Therefore, the touch control chip pre-stores the predetermined relationships between feature value of each the sensing unit and pressure. In this step, corresponding to the first implementing manner, there is a single current sensing unit.

In this embodiment, the predetermined relationships between feature value of each sensing unit and pressure are expressed by using a formula. The formula may be:

$$Rawdata == \frac{a}{\sqrt{1+\left(b+\dfrac{c}{d-F}\right)^2}} \qquad \text{Formula (1)}$$

Wherein, *Raw Data* stands for the current feature value, F stands for the current pressure, and *a*, *b*, *c*, and *d* are all constants.

Corresponding to different sensing unit, values of the constants *a*, *b*, *c*, and *d* are different. That is, different sensing unit corresponds to different Raw Data-Force curve (that is, curve graph corresponding to Formula (1)). For each sensing unit, a fitting method of the constants *a*, *b*, *c*, and *d* may be as follows.

(1) The single sensing unit is pressed sequentially by using n different pressures (Force), represented by $F_i$, i = 1,2,... *n*, and feature values Raw Data, represented by $r_i$, i = 1,2,... *n*, corresponding to the forces are separately recorded, where n is greater than or equal to 4 (because four unknown parameters *a*, *b*, *c*, and *d* need to be resolved, there are at least four pieces of sample data).

(2) The unknown parameters *a*, *b*, *c*, and *d* in Formula (1) can be obtained by fitting by using a least square method and the obtained n groups of data $(F_i, r_i)$, i = 1, 2,... *n*.

(3) *a*, *b*, *c*, and *d* are substituted into Formula 1 to obtain the constants *a*, *b*, *c*, and *d* corresponding to the sensing unit.

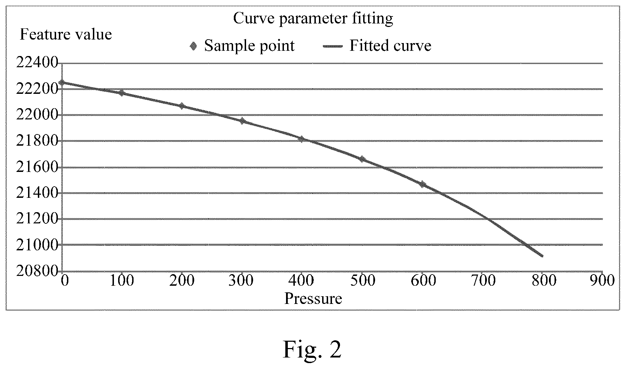

According to the foregoing manner, Raw Data-Force curve for each sensing unit is established. That is, the predetermined relationship between feature value of each sensing unit and pressure (which may also be referred to as predetermined feature value-pressure relationship) is obtained. As shown in Fig. 2, Fig. 2 is a Raw Data-Force curve corresponding to a sensing unit. It should be noted that, Fig. 2 is only an example for description.

The relationship between *Raw Data* and *F* may also be expressed by using the following model: *Rawdata* = $f(\theta, F)$, wherein, $\theta = (\theta_1, \theta_2, \cdots, \theta_n)$ represents n parameters, and may be obtained by means of curve fitting.

Step 105: calculating a current pressure corresponding to the current feature value according to the predetermined relationship between feature value of the current sensing unit and pressure.

In this step, corresponding to the first implementing manner, the current feature value is substituted for calculation according to Formula (1) and values of the constants $a$, $b$, $c$, and $d$ corresponding to the current sensing unit, the current pressure may be calculated.

The foregoing are specific descriptions of calculating a current pressure according to one current feature value in the first implementing manner. The current feature value is a feature value having a maximum absolute value of the multiple feature values.

The following uses the second implementing manner as an example to describe step 103 to step 105.

In this case, there are multiple current feature values. Step 104 may be understood as: obtaining stored predetermined relationships between multiple feature values of multiple sensing units and pressures.

Step 105 may be understood as: a current pressure corresponding to the multiple current feature values is generated according to the predetermined relationships between multiple feature values and pressures. Substantially, multiple unit partial pressures corresponding to the multiple current feature values are separately generated according to the predetermined relationships between multiple feature values and pressures (that is, according to Formula (1)). Then, the current pressure is calculated according to the multiple unit partial pressures. The current pressure may be an average value of the multiple unit partial pressures, or may be the sum of products of the unit partial pressures and weights of the unit partial pressures. The weight of each unit partial pressure may be set according to a distance between a sensing unit corresponding to the unit partial pressure and a center of the substrate having the position detection function. A shorter distance between a sensing unit and the center of the touch panel indicates a larger weight.

In the second implementing manner, multiple feature values are used for calculation, so as to calculate a more precise current pressure.

A second embodiment of the present disclosure relates to a pressure detection method. The second embodiment is similar to the first embodiment. A main difference is that, in the first embodiment, the predetermined relationships between feature values and pressures are expressed by using a formula. In the second embodiment of the present disclosure, the predetermined relationships between feature values and pressures are expressed by using a mapping list of pressure and boundary feature value and a linear approximation calculation formula.

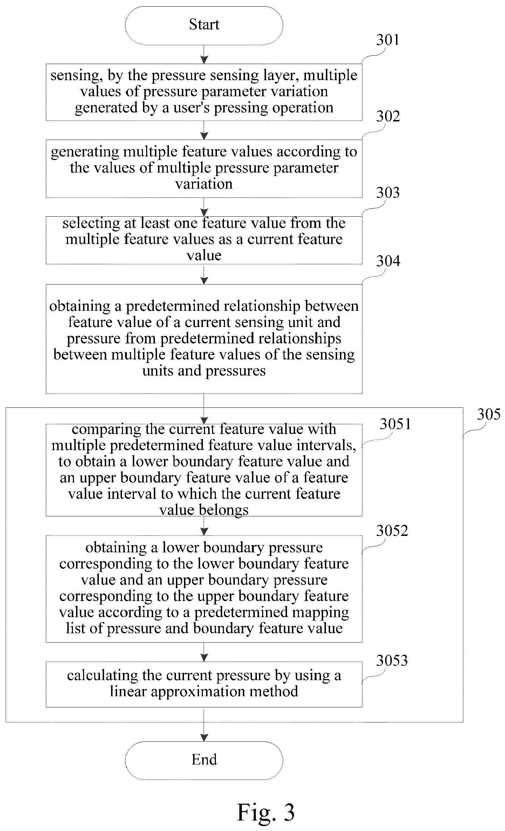

As shown in Fig. 3, Fig. 3 is a flowchart of the pressure detection method according to the second embodiment of the present disclosure. Step 301 to step 304 are basically the same as step 101 to step 104 in the first embodiment, and details are not described herein again. A difference is that step 305 in this embodiment includes sub-step 3051 to sub-step 3053. Specific descriptions are provided below.

Sub-step 3051: comparing the current feature value with multiple predetermined feature value intervals, to obtain a lower boundary feature value and an upper boundary feature value of a feature value interval to which the current feature value belongs.

Sub-step 3052: obtaining a lower boundary pressure corresponding to the lower boundary feature value and an upper boundary pressure corresponding to the upper boundary feature value according to a predetermined mapping list of pressure and boundary feature value.

Sub-step 3053: calculating the current pressure by using a linear approximation method.

The following specifically describes sub-step 3041 to sub-step 3043.

The touch control chip, or a system memory stores the predetermined mapping list of pressure and boundary feature value (Force-Raw Data), as shown in Table 1.

Table 1

| | Force(g) | $F_0$ | $F_1$ | $F_2$ | $F_3$ | $F_4$ | $F_5$ | ... |
|---|---|---|---|---|---|---|---|---|
| | Raw Data | $y_0$ | $y_1$ | $y_2$ | $y_3$ | $y_4$ | $y_5$ | |

In Table 1, data of pressures and data of boundary feature values are obtained by means of pre-testing. A specific method is as follows.

Multiple predetermined pressures sequentially act on a touch panel, and feature values corresponding to the pressures are calculated according to Formula (1), thereby establishing a mapping list of Force-Raw Data. In Table 1, the feature values *Raw Data* divides the feature values into multiple feature value intervals $(y_0, y_1]$, $(y_1, y_2]$, $(y_2, y_3]$....

In this embodiment, preferably, the multiple pressures $F_i$ ($i$ is an integer) are in ascending order, and pressure differences between each two adjacent pressures are equal. That is, pressure differences between lower boundary pressures corresponding to lower boundary feature values of the feature value intervals and upper boundary pressures corresponding to upper boundary feature values of the feature value intervals are equal. For example, the multiple pressures $F_i$ may be $F_0=0$, $F_1=50$, $F_2=100$, $F_3=150$, and $F_4=200$.... Wherein, a pressure difference is $step=F_{i+1}-F_i=50g$.

In this embodiment, a linear approximation calculation formula includes:

$$F = F_i + step * \frac{y_i - y}{y_i - y_{i+1}} \qquad \text{Formula (2)};$$

and

$$step = F_{i+1} - F_i \qquad \text{Formula (3).}$$

Wherein, F is the current pressure, $F_i$ and $F_{i+1}$ are the lower boundary pressure and the upper boundary pressure respectively, $y_i$ and $y_{i+1}$ are the lower boundary feature value and the upper boundary feature value respectively, and $y$ is the current feature value.

For example, if the current feature value y belongs to the feature value interval ($y_1$, $y_2$], a lower boundary feature value of the feature value interval ($y_1$, $y_2$] is $y_1$, and an upper boundary feature value of the feature value interval ($y_1$, $y_2$] is $y_2$. A lower boundary pressure $F_1$ corresponding to the lower boundary feature value $y_1$ and an upper boundary pressure $F_2$ corresponding to the upper boundary feature value $y_2$ are obtained according to Table 1. Then, a value of the current pressure $F$ is calculated according to Formula (2) and Formula (3).

It can be learned from Formula (2) that when the pressure differences between the lower boundary pressures corresponding to the lower boundary feature values of the feature value intervals and the upper boundary pressures corresponding to the upper boundary feature values of the feature value intervals are equal, that is, when the pressure difference *step* is a fixed value, *step* in Formula (2) may be substituted by the fixed value, and may not have to calculate the current pressure by using the formula $step=F_{i+1}-F_i$ every time, thereby reducing a calculation amount. However, this embodiment sets no limit to the pressure difference, and pressure differences between each two adjacent pressures may be not equal.

The second embodiment provides a second specific manner of calculating the current pressure according to the current feature value. Compared with the first embodiment, in the second embodiment, complex operations (operations such as squaring, root extracting, and the like are involved in the foregoing formula) performed by the touch control chip can be avoided, thereby relatively increasing a speed and reducing a burden of processing of the touch control chip. Especially, in the second implementing manner (in the first embodiment, if the current pressure is calculated according to multiple values of pressure parameter variation, multiple unit partial pressures need to be calculated by using Formula (1) for multiple times), a calculation amount can be greatly reduced.

A third embodiment of the present disclosure relates to a pressure detection method. The third embodiment is an improvement based on the first or the second embodiment. The primary improvement is that, in this embodiment, the current pressure is further corrected by using a current pressed position detected by the substrate having the position detection function.

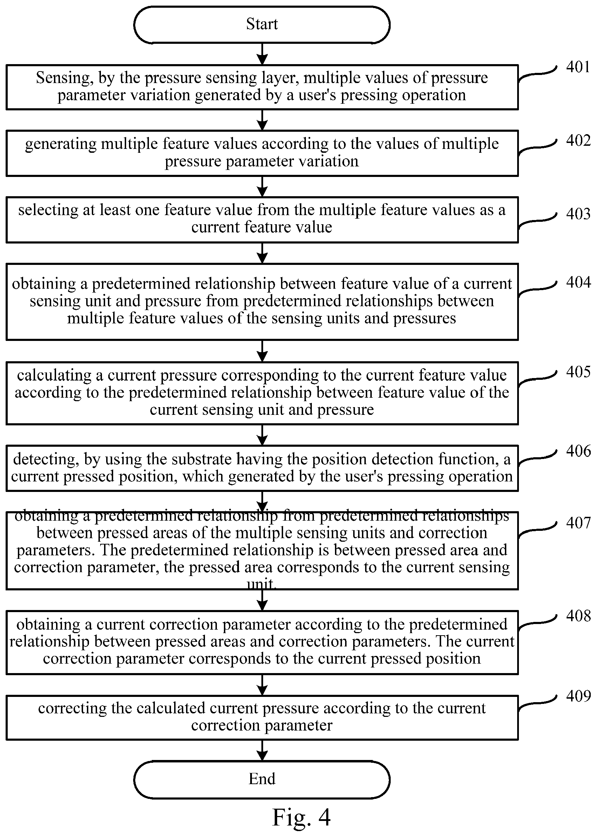

Fig. 4 shows a flowchart of the pressure detection method according to the third embodiment of the present disclosure. Taking the steps in the first embodiment as an example, step 401 to step 405 in this embodiment are similar to step 101 to step 105 in the first embodiment. Details are not described herein again. A difference is that step 406 to step 409 are newly added in this embodiment. Specific descriptions are provided below.

Step 406: detecting, by using the substrate having the position detection function, a current pressed position, which generated by the user's pressing operation.

That is, the touch control chip detects a current pressed position of the pressure by using the substrate having the position detection function.

Step 407: obtaining a predetermined relationship from predetermined relationships between press areas of the multiple sensing units and correction parameters. The predetermined relationship is between press area and correction parameter, the press area corresponds to the current sensing unit.

The touch control chip (or a system memory) stores the predetermined relationships between press areas and correction parameters, that press areas corresponding to the sensing units. Using the first implementing manner as an example, in this step, the touch control chip needs to obtain a predetermined relationship between press area corresponding to the single current sensing unit and correction parameter.

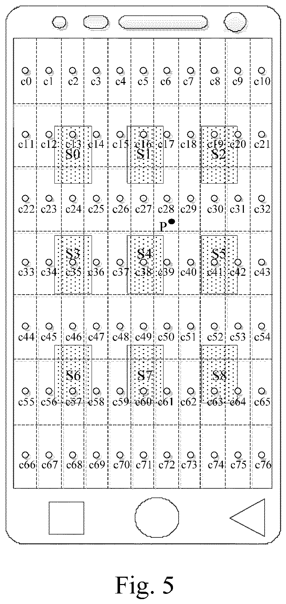

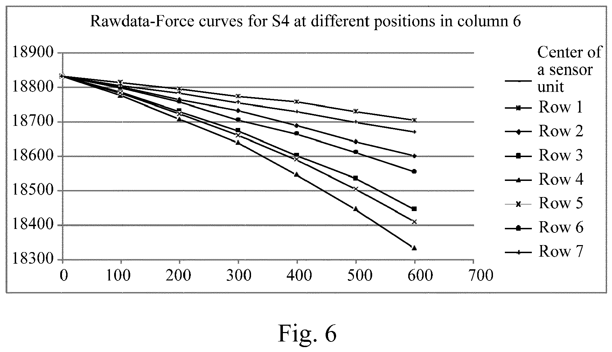

A manner of obtaining a predetermined relationship between press areas corresponding to each sensing unit and correction parameters is specifically described as follows. Referring to Fig. 5 and Fig. 6, Fig. 5 is a schematic diagram of a pressure sensing layer according to the third embodiment of the present disclosure, and Fig. 6 is a Raw Data-Force curve graph for a sensing unit S4 in Fig. 5 at different positions in column 6. Fig. 5 and Fig. 6 are only examples for description and are not intended to set any limit.

(1) A Raw Data-Force curve of each sensing unit at the center of each sensing unit of the pressure sensing layer is established by using the curve fitting method in the first embodiment. That is, values of $a$, $b$, $c$, and $d$ in Formula (1) corresponding to each sensing unit are obtained.

As shown in Fig. 5, the pressure sensing layer includes nine sensing units $S_0$, $S_1$, ..., and $S_8$. This embodiment sets no limit to the number of sensing units, and the number of sensing units may be set according to a requirement.

(2) The pressure sensing layer (a touch area of a touch panel or a touch screen) can be evenly divided into N press areas, wherein the press areas are represented as $C_0$, $C_1$, ..., and $C_{N-1}$.

As shown in Fig. 5, each rectangle divided by dotted lines represents one press area. For example, $N=77$ in Fig. 5 shows that the pressure sensing layer is evenly divided into 77 press areas. This embodiment sets no limit to the number of the press areas, and the number of press areas may be set according to a requirement. More press areas indicate a more precise detection result.

(3) The center of each press area is pressed by using a fixed pressure F, and when the pressure F in each press area acts on each sensing unit, record feature values corresponding to the value of pressure parameter variation generated by the sensing units as follows: $R_{00}$, $R_{01}$, ..., $R_{08}$, $R_{10}$, $R_{11}$, ..., $R_{18}$, ..., $R_{(N-1)0}$, $R_{(N-1)1}$, ..., and $R_{(N-1)8}$.

(4) The feature values corresponding to each press area are substituted into a Raw Data-Force curve corresponding to each sensing unit to calculate a pressure. For example, for a press area $C_i$, $R_{i0}$, $R_{i1}$, ..., and $R_{i8}$ are separately substituted into Raw Data-Force curves corresponding to the sensing units $S0$, $S1$, ..., and $S8$, to calculate pressures $F_{i0}$, $F_{i1}$, ..., and $F_{i8}$ detected by the sensing units when the pressure F in each press area acts on the sensing units.

(5) A ratio of a deformation elastic coefficient at the center of each sensing unit when the center of each press area is pressed to a deformation elastic coefficient that is obtained when the center of each sensing unit is directly pressed (a relative elastic coefficient) is calculated, wherein the relative elastic coefficient is a correction coefficient for correcting the calculated current pressure. Correction coefficients of the sensing units $S0$, $S1$, ..., and $S8$ corresponding to the press area $C_i$ are $\mu_{i0} = F/F_{i0}$, $\mu_{i1} = F/F_{i1}$, ..., and $\mu_{i8} = F/F_{i8}$, $i=0, 1, 2, ..., N-1$.

Therefore, corresponding to a sensing unit $Sj$, a predetermined relationship between press areas and correction parameters of the sensing unit $Sj$ may be expressed by using a mapping list of press area and correction parameter, that is, a $C_i$ - $\mu_{ij}$ mapping list, $i=0, 1, 2, ..., N-1$ and $j= 0, 1, ..., 8$.

Step 408: obtaining a current correction parameter according to the predetermined relationship between press areas and correction parameters. The current correction parameter corresponds to the current pressed position.

Specifically, first, the current pressed position is compared with multiple predetermined press areas, to obtain a current press area to which the current pressed position belongs. Then, the current correction parameter corresponding to the current press area is obtained according to the predetermined relationship between press areas corresponding to the current sensing unit and correction parameters.

Taking the first implementing manner in the first embodiment as an example, if the current sensing unit is $S_2$, a predetermined relationship between press area corresponding to the current sensing unit $S_2$ and correction parameter is obtained. That is, a $C_i$ - $\mu_{i2}$ mapping list is obtained. If it is determined that the current pressed position belongs to the press area $C_1$, that is, the current pressed position is $C_1$, a current correction parameter $\mu_{12}$ corresponding to the current press area $C_1$ is obtained according to the $C_i$ - $\mu_{i2}$ mapping list.

Step 409: correcting the calculated current pressure according to the current correction parameter.

That is, the obtained current correction parameter is multiplied by the current pressure, and a product is a corrected current pressure.

In addition, there is a derivation for an outputted pressure when an actual pressed position is not the center of a press area. To reduce the derivation, a quantity of press areas obtained by means of division may be increased. In consideration of various factors such as storage space and mass production efficiency, a quantity N of press areas actually obtained by means of division is limited. The present disclosure provides a spatial interpolation method to resolve the problem.

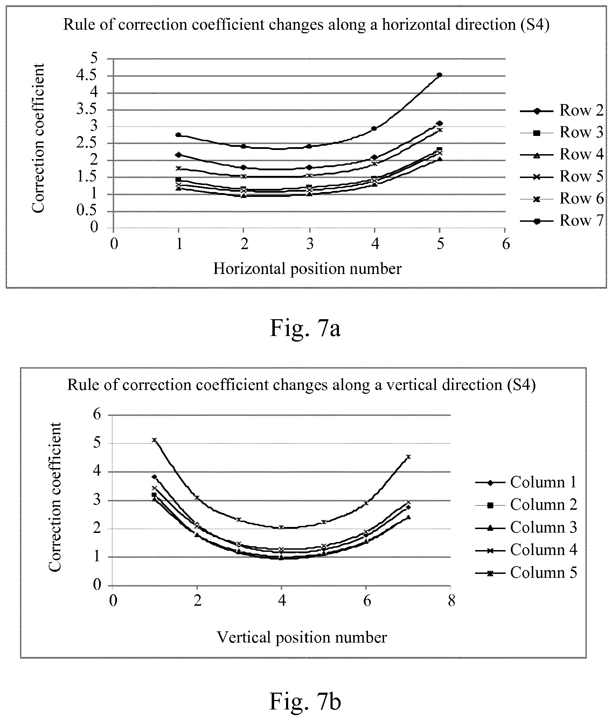

Fig. 7a shows ratios of deformation elastic coefficients in S4 when different positions in a same row are pressed to a deformation elastic coefficient in S4 when S4 is pressed (relative elastic coefficients), that is, correction coefficients. Each curve represents correction coefficients at different positions in a row in Fig. 5 and reflects a rule of correction coefficient changing along a horizontal direction.

Fig. 7b shows ratios of deformation elastic coefficients in S4 when different positions in a same column are pressed to a deformation elastic coefficient in S4 when S4 is pressed (relative elastic coefficients), that is, correction coefficients. Each curve represents correction coefficients at different positions in a column in Fig. 5 and reflects a rule of correction coefficient changing along a vertical direction.

It can be learned from Fig. 7a and Fig. 7b that the correction coefficients continuously change along the horizontal direction or the vertical direction. Therefore, when an actual pressed position is not the center of a press area, a correction coefficient at the pressed position can be estimated by using a correction coefficient in a press area near the pressed position. A correction coefficient at a point P in Fig. 5 may be estimated by using correction coefficients at C28, C29, C39, and C40. There may be multiple possible estimation methods (for example, a bilinear interpolation method) according to specific situations in this embodiment.

Coordinates (using an upper left corner as the origin coordinates) of $P$ are set as $(x, y)$, and coordinates of C28, C29, C39, and C40 are respectively $(x_{28}, y_{28})$, $(x_{29}, y_{29})$, $(x_{39}, y_{39})$, and $(x_{40}, y_{40})$. Using $S4$ as a reference, correction coefficients at C28, C29, C39, and C40 are $\mu_{28}$, $\mu_{29}$, $\mu_{39}$, and $\mu_{40}$.

Interpolation in a Y direction is:

$$\mu_{y1} = \frac{y_{39} - y}{y_{39} - y_{28}} u_{28} + \frac{y - y_{28}}{y_{39} - y_{28}} u_{39} \qquad \mu_{y2} = \frac{y_{40} - y}{y_{40} - y_{29}} u_{29} + \frac{y - y_{29}}{y_{40} - y_{29}} u_{40}.$$

$$u_P = \frac{x_{29} - x}{x_{29} - x_{28}} u_{y1} + \frac{x - x_{28}}{x_{29} - x_{28}} u_{y2}.$$

Interpolation in an X direction is:

In addition, multiple press areas near $P$ can also be selected to estimate the correction coefficient at P by using a surface fitting method. For example, in Fig. 5, nine press areas C16, C17, C18, C27, C28, C39, C38, C39, and C40 may be selected to estimate the correction coefficient by using quadric surface fitting.

The foregoing are specific descriptions of calculating a current pressure according to one current feature value in the first implementing manner.

The following uses the second implementing manner as an example for describing step 407 to step 409.

Step 407 may be understood by now as: obtaining stored predetermined relationships between multiple feature values and pressures, the multiple feature values respectively correspond to multiple sensing units.

Step 408 may be understood as: obtaining multiple current correction parameters of the multiple sensing units corresponding to the current pressed position, according to the predetermined relationships between multiple press areas and correction parameters.

Step 409 may be understood as: separately correcting multiple unit partial pressures according to the multiple current correction parameters, and calculating the current pressure according to multiple corrected unit partial pressures. Calculation of the current pressure according to the multiple corrected unit partial pressures is similar to calculation of the current pressure according to the multiple unit partial pressures in the first embodiment. Details are not described herein again. In addition, in the second implementing manner, the spatial interpolation method may also be used to resolve a problem that there is a derivation for an outputted pressure when an actual pressed position is not the center of the press area. This is similar to the foregoing descriptions. Details are not described herein again.

Compared with the first or the second embodiment, in the third embodiment, the current pressure is corrected by using the current pressed position detected by the substrate having the position detection function, enabling a detected pressure to have good consistency at different positions. This avoids the detection results of a same pressure in different press areas are inconsistent caused by a deformation difference in the different press areas.

Division of the steps of the foregoing methods is only for ease of description, and during implementing, the steps may be combined into one step or some steps may be split into multiple steps. All shall fall within the protection scope of this patent provided that a same logical relationship is included. Insignificant modifications added to or insignificant designs introduced in an algorithm or a procedure without changing the core of the algorithm or the procedure shall fall within the protection scope of this patent.

A fourth embodiment of the present disclosure relates to a touch control chip. The touch control chip includes a driving unit, at least one detection unit, and a calculation unit. The detection unit is connected between the driving unit and the calculation unit.

The driving unit is configured to connect to an input end of a pressure sensing layer. The detection unit is configured to connect to an output end of the pressure sensing layer. The detection unit is configured to receive multiple values of pressure parameter variation, and generate multiple feature values according to the multiple values of pressure parameter variation. An input end of the calculation unit is connected to an output end of the detection unit.

The calculation unit is configured to select at least one feature value from the multiple feature values as a current feature value. The calculation unit is further configured to obtain a predetermined relationship between feature value of a current sensing unit and pressure from predetermined relationships between multiple feature values of the sensing units and pressures, and calculate a current pressure corresponding to the current feature value according to the predetermined relationship between feature values of the current sensing units and pressures.

The detection unit includes an amplifying circuit, a filter circuit, and a demodulation circuit. An input end of the filter circuit is connected to an output end of the amplifying circuit and an output end of the filter circuit is connected to an input end of the demodulation circuit. An input end of the amplifying circuit is configured to connect to the output end of the pressure sensing layer, and is configured to receive at least one of the multiple values of pressure parameter variation. An output end of the demodulation circuit is connected to the calculation unit, and is configured to output the feature values corresponding to the values of pressure parameter variation.

Specifically, the touch control chip in this embodiment has multiple circuit implements. The following uses three implements as an example for description when the pressure sensing layer is a capacitance sensing layer.

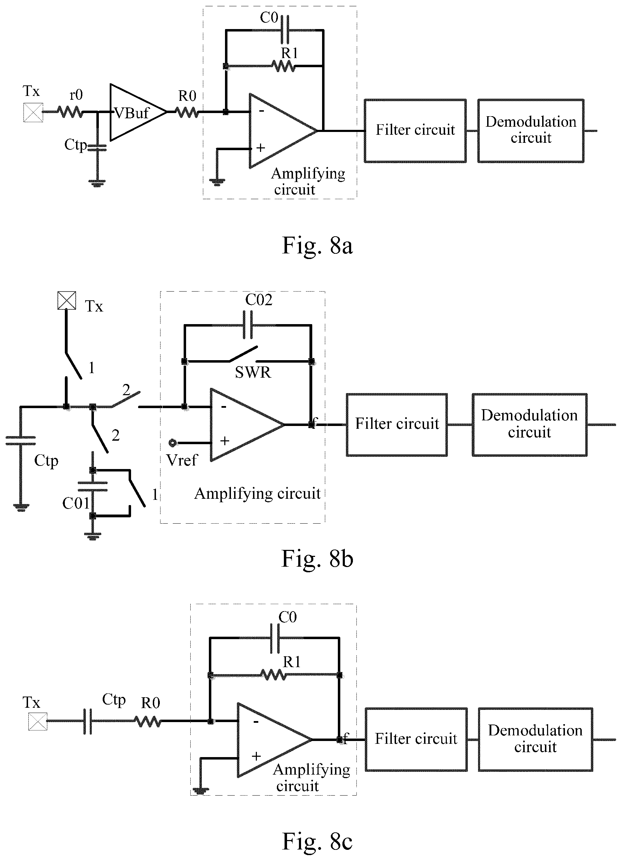

The Fig. 8a shows a schematic diagram of a first circuit structure of the touch control chip. Fig. 8a shows an RC voltage dividing structure. *Tx* is a drive signal which can be a signal in any form such as a sine wave or a square wave. The drive signal *Tx* is outputted by a driving unit (not shown). *Ctp* is an equivalent capacitance of a value of pressure parameter variation, *C*0 is a capacitor, and *r*0, *R*0, and *R*1 are resistors. A basic detection principle of the circuit is as follows:

First, the drive signal *Tx* passes through the resistor R0 to be coupled to the equivalent capacitance *Ctp.* Next, a signal of a value of pressure parameter variation *Ctp* outputted by the equivalent capacitance is amplified by the amplifying circuit. Then, the signal amplified by the amplifying circuit is sent to the filter circuit for filtering processing. After that, a signal outputted by the filter circuit is sent to the demodulation circuit for demodulation to obtain a feature value *Raw Data* corresponding to the value of pressure parameter variation *Ctp,* that is, a specific feature value of the original signal. Finally, after the feature value *Raw Data* is sent to the calculation unit, the calculation unit calculates a current pressure according to the feature value *Raw Data*.

It should be noted that a basic feature value outputted by each sensing unit may be set to 0 (that is, a basic pressure parameter is 0) by means of a circuit hardware design. In this case, the value of pressure parameter variation is a measured pressure parameter *Ctp*, and the feature value corresponding to the value of pressure parameter variation is a measured feature value calculated directly by using the measured pressure parameter.

The Fig. 8b shows a schematic diagram of a second circuit structure of the touch control chip. In Fig. 8b, capacitance detection is performed by using a charge transfer method. *Tx* is a drive signal which can be a signal in any form such as a sine wave or a square wave. The drive signal *Tx* is outputted by a driving unit (not shown). *Ctp* is an equivalent capacitance of a value of pressure parameter variation, *C*01 and *C*02 are capacitors, *SWR* is a switch, and *Vref* is a reference voltage. A basic working principle of the circuit is as follows:

First, a control switch $\phi_1$ is connected, a control switch $\phi_2$ is disconnected, the equivalent capacitance *Ctp* is charged, and the capacitor *C*01 is discharged. Next, the control switch $\phi_2$ is connected, the control switch $\phi_1$ is disconnected, the capacitor *C*01 is charged by means of voltage dividing by using the equivalent capacitance *Ctp,* and *C*02 is charged by means of integrating. Then, an output signal of an integrating circuit is sent to the filter circuit for filtering processing. After that, an output signal of the filter circuit is sent to the demodulation circuit for demodulation to obtain a feature value *Raw Data* corresponding to a value of pressure parameter variation outputted by the equivalent capacitance, that is, a specific feature value of the original signal. Finally, after the feature value *Raw Data* is sent to the calculation unit, the calculation unit calculates a current pressure according to the feature value *Raw Data*.

Fig. 8c shows a schematic diagram of a third circuit structure of the touch control chip. Fig. 8c shows an integrating and amplifying circuit. *Tx* is a drive signal and may be a signal in any form such as a sine wave or a cosine wave. The drive signal *Tx* is outputted by a driving unit (not shown). *Ctp* is an equivalent capacitance of a value of

pressure parameter variation, $C0$ is a capacitor, and $R0$ and $R1$ are resistors. A basic working principle of the circuit is as follows:

First, the drive signal $Tx$ passes through the equivalent capacitance $Ctp$ to be coupled to the amplifying circuit at the back end. Next, an output signal of the amplifying circuit is sent to the filter circuit for filtering processing. Then, an output signal of the filter circuit is sent to the demodulation circuit for demodulation to obtain a feature value *Raw Data* corresponding to a value of pressure parameter variation outputted by the equivalent capacitance, that is, a specific feature value of the original signal. Finally, after the feature value *Raw Data* is sent to the calculation unit, the calculation unit calculates a current pressure according to the feature value *Raw Data*.

In addition, there may be multiple detection units. That is, input ends of the multiple detection units are respectively connected to the output ends of the multiple sensing units, to respectively process the multiple values of pressure parameter variation outputted by the multiple sensing units, so as to obtain the multiple feature values corresponding to the multiple values of pressure parameter variation.

It should be noted that $Ctp$ in Fig. 8a, Fig. 8b, and Fig. 8c is an equivalent capacitance of a value of pressure parameter variation, and in the figures, working processes of the circuits of the touch control chip are only intended to be described in principle. During actual application, the detection unit of the touch control chip actually receives a basic pressure parameter before a user's pressing operation and a measured pressure parameter after the pressing operation (a difference between the measured pressure parameter and the basic pressure parameter is the value of pressure parameter variation), and generates a basic feature value corresponding to the basic pressure parameter and a measured feature value corresponding to the measured pressure parameter separately. The calculation unit calculates the difference between the measured feature value and the basic feature value as an feature value corresponding to the value of pressure parameter variation. This embodiment sets no limit to the calculation. It may further be that subsequent calculation is performed by using a measured feature value generated according to a measured pressure parameter (because the basic feature value is fixed, variation of a difference with a pressure is substantially variation of the measured feature value with the pressure).

The foregoing touch control chip is an execution body of the pressure detection method in the first or the second embodiment.

Actually, the touch control chip is further connected to a substrate having a position detection function. The touch control chip detects a current pressed position generated by the user's pressing operation by using the substrate having the position detection function; obtains predetermined relationships between press areas corresponding to one or more current sensing units and correction parameters from predetermined relationships that are between press areas of the multiple sensing units and correction parameters, obtains one or more current correction parameters corresponding to the current pressed position according to the obtained one or more predetermined relationships between press areas and correction parameters, and correct a current pressure according to the one or more current correction parameters.

The foregoing touch control chip is an execution body of the pressure detection method in the third embodiment.

It is not difficult to find that this embodiment is an execution body embodiment of the pressure detection method in any one of the first to the third embodiments. This embodiment may be performed in combination with any one of the first to the third embodiments. Related technical details mentioned in any one of the first to the third embodiments are still true in this embodiment. To avoid repetition, details are not provided herein again. Correspondingly, related technical details mentioned in this embodiment may also be applied to any one of the first to the third embodiments.

It should be noted that the units involved in this embodiment are all logical units. In practical application, a logical unit may be a physical unit, or may be a part of a physical unit, or may be implemented by a combination of multiple physical units. In addition, to emphasize a creative part of the present disclosure, this embodiment introduces the units that are closely related to the technical problems to be resolved in this present disclosure. However, this does not indicate that other units are not included in this embodiment.

A fifth embodiment of the present disclosure relates to a pressure detection module. The pressure detection module includes a pressure sensing layer, a substrate having a position detection function, and the touch control chip according to the fourth embodiment.

The pressure sensing layer is disposed below the substrate having the position detection function, and the pressure sensing layer includes multiple sensing units. The driving unit is connected to an input end of the substrate having the position detection function and input ends of the multiple sensing units of the pressure sensing layer. An input end of the detection unit is connected to output ends of the multiple sensing units of the pressure sensing layer. The calculation unit is further connected to an output end of the substrate having the position detection function.

Actually, when the pressure detection module is applied to an electronic device, the pressure detection module is disposed in a metal middle frame of the electronic device (such as a tablet computer or a mobile phone).

In this embodiment, the pressure sensing layer may be a capacitance sensing layer or a resistance sensing layer.

In this embodiment, the substrate having the position detection function may be a touch panel, and the touch panel may be a touch panel of a notebook computer. When the pressure sensing layer is a capacitance sensing layer, a value of pressure parameter variation is a coupling capacitance between the capacitance sensing layer and a metal middle frame. When the pressure sensing layer is a resistance sensing layer, the value of pressure parameter variation is a resistance variation caused by deformation of the resistance sensing layer.

The substrate having the position detection function may be a touch screen. In this case, the pressure detection module further includes a display unit, and the touch screen and the display unit form, for example, a touch display unit of a mobile phone.

When the pressure sensing layer is a capacitance sensing layer, the display unit is disposed between the capacitance sensing layer and the touch screen. In this case, the value of pressure parameter variation is the sum of a coupling capacitance between the capacitance sensing layer and a metal middle frame and a coupling capacitance between the capacitance sensing layer and the display unit (a common electrode layer Vcom). According to different types of the display unit, the capacitance sensing layer may be disposed at different specific positions on a lower surface of the display unit. Detailed descriptions are provided below.

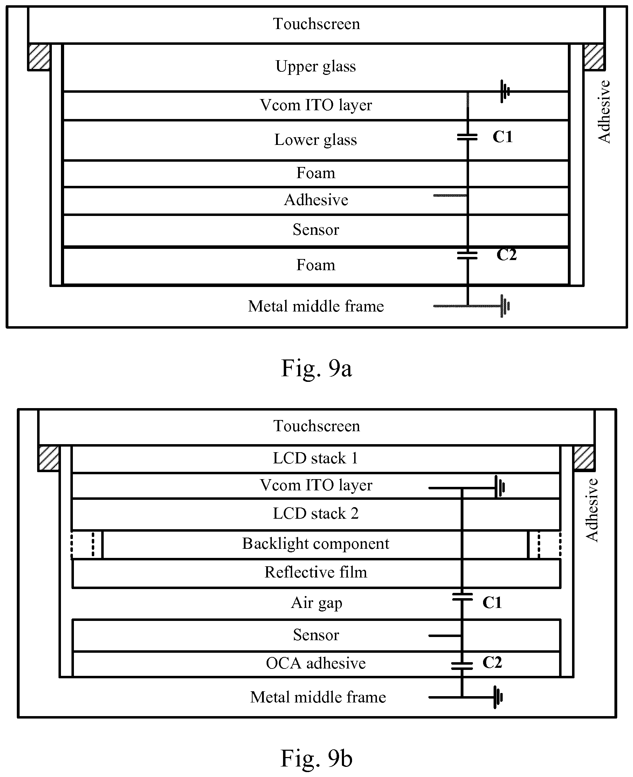

As shown in Fig. 9a, the display unit is an organic light-emitting diode display unit (OLED display). The display unit includes an upper glass layer, a Vcom layer (common electrode layer), a lower glass layer, and a foam layer that are sequentially arranged from top to bottom. The capacitance sensing layer is pasted to the foam layer by using an adhesive layer. The capacitance sensing layer is attached to the lower surface of the display unit by using the foam layer. There is a certain gap between the capacitance sensing layer and the metal middle frame, and the gap is filled with a foam having good compressibility. After a system is powered on and works, the Vcom layer of the display unit and the metal middle frame are connected to a system ground. A capacitance $C_1$ exists between the capacitance sensing layer and the Vcom layer of the display unit, a capacitance $C_2$ exists between the capacitance sensing layer and the metal middle frame, and $C_1$ and $C_2$ are connected in parallel. When the touch screen is pressed, the touch screen deforms to decrease a distance between the capacitance sensing layer and the middle frame. The capacitance $C_2$ increases, a change of $C_1$ may be basically omitted, and a current pressure may be determined by detecting a change of $C_2$. A value of pressure parameter variation $C_{tp} = C_1 + C_2$.

As shown in Fig. 9b, the display unit is a liquid crystal display unit, and the display unit includes an LCD stack 1, a Vcom layer (common electrode layer), an LCD stack 2, a backlight component, and a reflective film that are sequentially arranged from top to bottom. In this structure, the capacitance sensing layer is attached to the metal middle frame, and there is an air gap between the capacitance sensing layer and the lower surface (that is, the reflective film) of the display unit. After a system is powered on and works, the Vcom layer of the display unit and the metal middle frame are connected to a system ground. A capacitance $C_1$ exists between the capacitance sensing layer and the Vcom layer of the display unit, a capacitance $C_2$ exists between the capacitance sensing layer and the metal middle frame, and $C_1$ and $C_2$ are connected in parallel. When the touch screen is pressed, the touch screen deforms to decrease a distance between the Vcom layer of the display unit and the capacitance sensing layer. The capacitance $C_1$ increases, a change of $C_2$ may be approximately omitted, and a current pressure may be determined by detecting a change of $C_1$. A value of pressure parameter variation $C_{tp} = C_1 + C_2$.

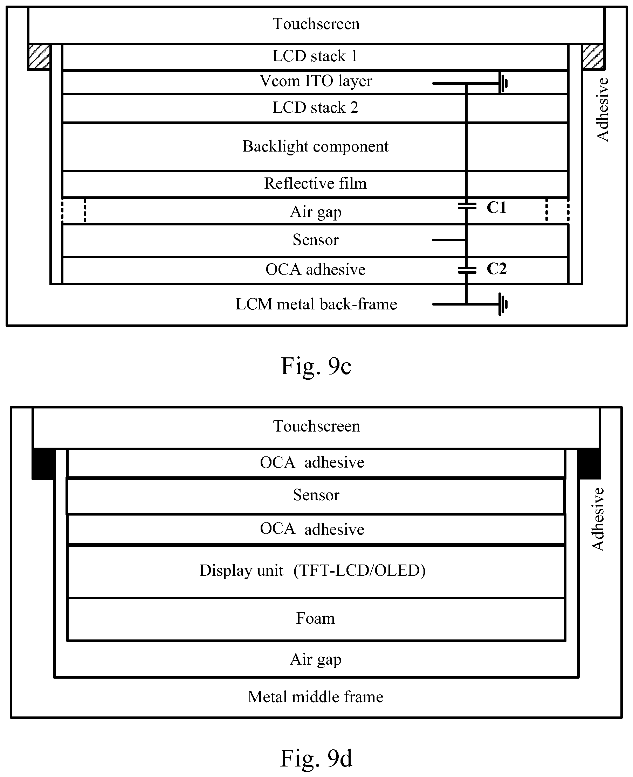

As shown in Fig. 9c, the display unit is a liquid crystal display unit, and the display unit in Fig. 9c is similar to that in Fig. 9b. Details are not described herein again. The structure is applied to a manner in which the display unit has a metal back-frame (in this case, the metal back-frame of the display unit may be equivalent to the foregoing metal middle frame). The structure is similar to that in Fig. 2b, and a different part is that the capacitance sensing layer is attached to the metal back-frame of the display unit. A value of pressure parameter variation $C_{tp} = C_1 + C_2$.

When the pressure sensing layer is a resistance sensing layer, the display unit is disposed between the resistance sensing layer and the touch screen, or the resistance sensing layer is disposed between the display unit and the touch screen. In this case, a value of pressure parameter variation is a value of resistance variation caused by deformation of the resistance sensing layer.

For a structure that the display unit is disposed between the resistance sensing layer and the touch screen, refer to Fig. 9a (provided that the capacitance sensing layer is replaced with the resistance sensing layer). The resistance sensing layer is in close contact with the lower surface of the display unit. For a structure that the resistance sensing layer is disposed between the display unit and the touch screen, refer to Fig. 9d. The resistance sensing layer is pasted between the display unit and the touch screen by using an OCA adhesive layer. The display unit may be an OLED display unit or a liquid crystal display unit.

As shown in the following, using structures in Fig. 8a and Fig. 9a as an example, a derivation manner of Formula (1) in the first embodiment is described in detail.

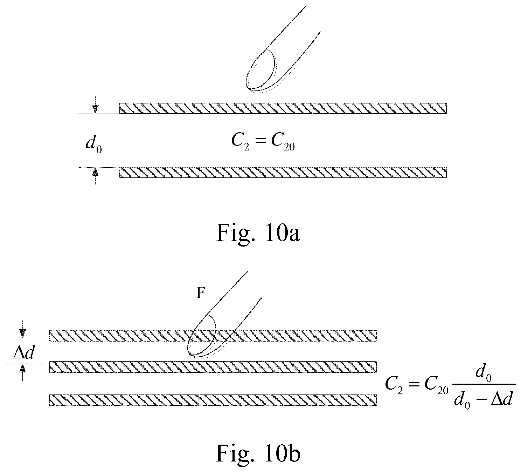

An equivalent capacitance of a value of pressure parameter variation is $C_{tp} = C_1 + C_2$. During a pressing process, $C_1$ is considered to be approximately unchanged, $C_2$ increases as a pressure increases, and $C_2$ may be equivalent as a parallel plate capacitance in a partial press area, as shown in Fig. 10a and Fig. 10b.

Assuming that a drive signal $Tx = A\sin(wt + \varphi)$, a gain of the amplifying circuit is $G$, and the demodulation circuit uses amplitude demodulation, outputted *Raw Data* is:

$$Rawdata = \frac{AG}{\sqrt{1+\left[wr_0\left(C_1+C_2\right)\right]^2}}$$

$$= \frac{AG}{\sqrt{1+\left[wr_0\left(C_1+C_{20}\dfrac{d_0}{d_0-\Delta d}\right)\right]^2}} \qquad \text{Formula (4).}$$

Wherein, $\Delta d$ is a deformation degree generated by a specific pressure $F$, deformation generated by a pressure in this embodiment of the present disclosure is tiny deformation, $F$ and $\Delta d$ approximately meet the Hooke's law, that is $F = k\Delta d$, and $k$ corresponding to different positions is different. Formula (4) may be rewritten as:

$$Rawdata = \frac{AG}{\sqrt{1+\left[wr_0\left(C_1+\dfrac{C_2d_0}{d_0-F/k}\right)\right]^2}} \qquad \text{Formula (5).}$$

$$= \frac{AG}{\sqrt{1+\left[wr_0\left(C_1+\dfrac{kC_{20}d_0}{kd_0-F}\right)\right]^2}}$$

Let $a = AG$, $b = wr_0C_1$, $c = wr_0C_{20}kd_0$, and $d = kd_0$. Formula (5) may be rewritten as:

$$Rawdata == \frac{a}{\sqrt{1+\left(b+\dfrac{c}{d-F}\right)^2}} \qquad \text{Formula (1).}$$

As described above, Formula (1) can be derived.

It is not difficult to find that this embodiment is a system embodiment of the pressure detection method in any one of the first to the third embodiments. This embodiment may be performed in combination with any one of the first to the third embodiments. Related technical details mentioned in any one of the first to the third embodiments are still true in this embodiment. To avoid repetition, details are not provided herein again. Correspondingly, related technical details mentioned in this embodiment may also be applied to any one of the first to the third embodiments.

A person of ordinary skill in the art should understand that all or some of the steps of the method in the embodiments may be implemented by a program instructing relevant hardware. The program is stored in a storage medium and includes several instructions to enable a device (which may be a single-chip microcomputer, a chip, or the like) or a processor to perform all or some of the steps of the method in the embodiments of this application. The foregoing storage medium includes any medium that can store program code, such as a USB flash drive, a mobile hard disk, a read-only memory (ROM), a random access memory (RAM), a magnetic disk, or an optical disc.

A person of ordinary skill in the art can understand that, the above embodiments are specific implements for embodiment of the present disclosure, and during actual application, various changes can be made to the embodiments in form and detail without departing from the spirit and scope of the present disclosure.

**Claims**

1. A pressure detection method, comprising:

   sensing, by using a pressure sensing layer, multiple values of pressure parameter variation generated by a user's pressing operation, wherein the multiple values of pressure parameter variation are respectively generated by multiple sensing units of the pressure sensing layer;

generating multiple feature values according to the values of multiple pressure parameter variation;

selecting at least one feature value from the multiple feature values as a current feature value, wherein a value of pressure parameter variation corresponding to the current feature value is generated by a current sensing unit;

obtaining a predetermined relationship between feature value of the current sensing unit and pressure from predetermined relationships between multiple feature values of the sensing units and pressures; and

calculating a current pressure corresponding to the current feature value according to the predetermined relationship between the feature value of the current sensing unit and pressure.

2. The pressure detection method according to claim 1, wherein the predetermined relationship between feature value of the current sensing unit and pressure is expressed by using a formula, and the formula is:

$$Rawdata == \frac{a}{\sqrt{1+\left(b+\dfrac{c}{d-F}\right)^2}},$$

wherein *Raw Data* stands for the current feature value, *F* stands for the current pressure, and *a*, *b*, *c*, and *d* are all constants.

3. The pressure detection method according to claim 2, wherein the constants *a*, *b*, *c*, and *d* are calculated according to a curve fitting method.

4. The pressure detection method according to claim 1, wherein the calculating a current pressure corresponding to the current feature value according to the predetermined relationship between the feature value of the current sensing unit and pressure comprises:

comparing the current feature value with predetermined multiple feature value intervals, to obtain a lower boundary feature value and an upper boundary feature value of a feature value interval to which the current feature value belongs;

obtaining a lower boundary pressure corresponding to the lower boundary feature value and an upper boundary pressure corresponding to the upper boundary feature value according to a predetermined mapping list of pressure and boundary feature value; and

calculating the current pressure according to a linear approximation method, wherein a calculation formula of the linear approximation method comprises:

$$F = F_i + step * \frac{y_i - y}{y_i - y_{i+1}}$$

and step=$F_{i+1}$-$F_i$, wherein F stands for the current pressure, $F_i$ and $F_{i+1}$ stand for the lower boundary pressure and the upper boundary pressure respectively, $y_i$ and $y_{i+1}$ stand for the lower boundary feature value and the upper boundary feature value respectively, and y stands for the current feature value.

5. The pressure detection method according to claim 3 or 4, wherein in the mapping list of pressure and boundary feature value, pressure differences between lower boundary pressures corresponding to lower boundary feature values of the feature value intervals and upper boundary pressures corresponding to upper boundary feature values of the feature value intervals are equal.

6. The pressure detection method according to any one of claims 1 to 5, wherein the pressure detection method further comprises:

detecting, by using a substrate having a position detection function that is disposed above the pressure sensing layer, a current pressed position generated by the user's pressing operation;

obtaining a predetermined relationship between press area corresponding to the current sensing unit and correction parameter, from predetermined relationships that are between press areas of the multiple sensing units and correction parameters;

obtaining a current correction parameter corresponding to the current pressed position according to the predetermined relationship between press area corresponding to the current sensing unit and correction parameter; and

correcting the current pressure according to the current correction parameter.

7. The pressure detection method according to claim 6, wherein the obtaining a current correction parameter corresponding to the current pressed position according to the predetermined relationship between press area corresponding to the current sensing unit and correction parameter comprises:

comparing the current pressed position with multiple predetermined press areas, to obtain a current press area to which the current pressed position belongs; and
obtaining a current correction parameter corresponding to the current press area according to the predetermined relationship between press areas corresponds to the current sensing unit and correction parameter.

8. The pressure detection method according to any one of claims 1 to 7, wherein there is one current feature value, and the current feature value is a feature value having a maximum absolute value of the multiple feature values.

9. A touch control chip, wherein the touch control chip is applied to the pressure detection method according to any one of claims 1 to 8, and the touch control chip comprises a driving unit, at least one detection unit, and a calculation unit;
the driving unit is configured to connect to an input end of the pressure sensing layer;
the detection unit is configured to connect to an output end of the pressure sensing layer; and the detection unit is configured to receive the multiple values of pressure parameter variation, and generate the multiple feature values according to the multiple values of pressure parameter variation; and
an input end of the calculation unit is connected to an output end of the detection unit; the calculation unit is configured to select at least one feature value from the multiple feature values as a current feature value; and the calculation unit is further configured to: obtain a predetermined relationship between feature value of the current sensing unit and pressure from predetermined relationships between multiple feature values of the sensing units and pressures, and calculate a current pressure corresponding to the current feature value according to the predetermined relationship between feature value of the current sensing unit and pressure.

10. The touch control chip according to claim 9, wherein the detection unit comprises an amplifying circuit, a filter circuit, and a demodulation circuit;
an input end of the filter circuit is connected to an output end of the amplifying circuit and an output end of the filter circuit is connected to an input end of the demodulation circuit;
an output end of the demodulation circuit is connected to the input end of the calculation unit; and
an input end of the amplifying circuit is configured to connect to the output end of the pressure sensing layer.

11. A pressure detection module, comprising a pressure sensing layer, a substrate having a position detection function, and the touch control chip according to claim 9 or 10, wherein
the pressure sensing layer is disposed under the substrate having the position detection function, and the pressure sensing layer comprises the multiple sensing units;
the driving unit is connected to an input end of the substrate having the position detection function and input ends of the multiple sensing units of the pressure sensing layer;
an input end of the detection unit is connected to output ends of the multiple sensing units of the pressure sensing layer; and
the calculating unit is further connected to an output end of the substrate having the position detection function.

12. The pressure detection module according to claim 11, wherein the pressure sensing layer is a capacitance sensing layer or a resistance sensing layer.

13. The pressure detection module according to claim 11, wherein the substrate having the position detection function is a touch panel.

14. The pressure detection module according to claim 11, wherein the substrate having the position detection function is a touch screen, and the pressure detection module further comprises a display unit; and
the display unit is disposed between the pressure sensing layer and the touch screen.

15. The pressure detection module according to claim 14, wherein the pressure sensing layer is in close contact with a lower surface of the display unit.

16. The pressure detection module according to claim 14, wherein the display unit is a liquid crystal display unit, and the pressure sensing layer is a capacitance sensing layer; and
there is a gap between the capacitance sensing layer and the liquid crystal display unit.

17. The pressure detection module according to claim 11, wherein the substrate having the position detection function is a touch screen, the pressure sensing layer is a resistance sensing layer, and the pressure detection module further comprises a display unit; and
the resistance sensing layer is disposed between the display unit and the touch screen.

```
                    ┌─────────────────────┐
                    │        Start         │
                    └─────────────────────┘
                               │
                               ▼                        101
        ┌──────────────────────────────────────────────┐
        │  sensing, by the pressure sensing layer, multiple │
        │  values of pressure parameter variation generated │
        │         by a user's pressing operation            │
        └──────────────────────────────────────────────┘
                               │                        102
                               ▼
        ┌──────────────────────────────────────────────┐
        │   generating multiple feature values according to │
        │     the values of multiple pressure parameter     │
        │                   variation                       │
        └──────────────────────────────────────────────┘
                               │                        103
                               ▼
        ┌──────────────────────────────────────────────┐
        │     selecting at least one feature value from the │
        │  multiple feature values as a current feature value │
        └──────────────────────────────────────────────┘
                               │                        104
                               ▼
        ┌──────────────────────────────────────────────┐
        │ obtaining a predetermined relationship between    │
        │    feature value of a current sensing unit and    │
        │      pressure from predetermined relationships    │
        │   between multiple feature values of the sensing  │
        │               units and pressures                 │
        └──────────────────────────────────────────────┘
                               │                        105
                               ▼
        ┌──────────────────────────────────────────────┐
        │  calculating a current pressure corresponding to  │
        │     the current feature value according to the    │
        │ predetermined relationship between feature value  │
        │    of the current sensing unit and pressure       │
        └──────────────────────────────────────────────┘
                               │
                               ▼
                    ┌─────────────────────┐
                    │         End          │
                    └─────────────────────┘
```

Fig. 1

Fig. 2

```
                    ┌─────────────────────┐
                    │        Start        │
                    └─────────────────────┘
                               │                          301
                               ▼
        ┌────────────────────────────────────────────┐
        │  sensing, by the pressure sensing layer,    │
        │  multiple values of pressure parameter      │
        │  variation generated by a user's pressing   │
        │  operation                                  │
        └────────────────────────────────────────────┘   302
                               │
                               ▼
        ┌────────────────────────────────────────────┐
        │  generating multiple feature values         │
        │  according to the values of multiple        │
        │  pressure parameter variation               │
        └────────────────────────────────────────────┘   303
                               │
                               ▼
        ┌────────────────────────────────────────────┐
        │  selecting at least one feature value from  │
        │  the multiple feature values as a current   │
        │  feature value                              │
        └────────────────────────────────────────────┘   304
                               │
                               ▼
        ┌────────────────────────────────────────────┐
        │  obtaining a predetermined relationship     │
        │  between feature value of a current         │
        │  sensing unit and pressure from             │
        │  predetermined relationships between        │
        │  multiple feature values of the sensing     │
        │  units and pressures                        │
        └────────────────────────────────────────────┘
```

comparing the current feature value with multiple predetermined feature value intervals, to obtain a lower boundary feature value and an upper boundary feature value of a feature value interval to which the current feature value belongs — 3051

305

obtaining a lower boundary pressure corresponding to the lower boundary feature value and an upper boundary pressure corresponding to the upper boundary feature value according to a predetermined mapping list of pressure and boundary feature value — 3052

calculating the current pressure by using a linear approximation method — 3053

```
                    ┌─────────────────────┐
                    │         End         │
                    └─────────────────────┘
```

## Fig. 3

```
                          ┌─────────────────────┐
                          │        Start        │
                          └─────────────────────┘
                                    │
   ┌────────────────────────────────▼────────────────────────────┐
   │ Sensing, by the pressure sensing layer, multiple values of pressure │  ⟋ 401
   │   parameter variation generated by a user's pressing operation     │
   └─────────────────────────────────────────────────────────────┘
                                    │
   ┌────────────────────────────────▼────────────────────────────┐
   │ generating multiple feature values according to the values of multiple │  ⟋ 402
   │                 pressure parameter variation                   │
   └─────────────────────────────────────────────────────────────┘
                                    │
   ┌────────────────────────────────▼────────────────────────────┐
   │ selecting at least one feature value from the multiple feature values as a │  ⟋ 403
   │                     current feature value                      │
   └─────────────────────────────────────────────────────────────┘
                                    │
   ┌────────────────────────────────▼────────────────────────────┐
   │ obtaining a predetermined relationship between feature value of a current │  ⟋ 404
   │  sensing unit and pressure from predetermined relationships between │
   │        multiple feature values of the sensing units and pressures   │
   └─────────────────────────────────────────────────────────────┘
                                    │
   ┌────────────────────────────────▼────────────────────────────┐
   │ calculating a current pressure corresponding to the current feature value │  ⟋ 405
   │  according to the predetermined relationship between feature value of the │
   │             current sensing unit and pressure                  │
   └─────────────────────────────────────────────────────────────┘
                                    │
   ┌────────────────────────────────▼────────────────────────────┐
   │ detecting, by using the substrate having the position detection function, a │  ⟋ 406
   │ current pressed position, which generated by the user's pressing operation │
   └─────────────────────────────────────────────────────────────┘
                                    │
   ┌────────────────────────────────▼────────────────────────────┐
   │ obtaining a predetermined relationship from predetermined relationships │  ⟋ 407
   │   between pressed areas of the multiple sensing units and correction │
   │ parameters. The predetermined relationship is between pressed area and │
   │ correction parameter, the pressed area corresponds to the current sensing │
   │                         unit.                                  │
   └─────────────────────────────────────────────────────────────┘
                                    │
   ┌────────────────────────────────▼────────────────────────────┐
   │ obtaining a current correction parameter according to the predetermined │  ⟋ 408
   │ relationship between pressed areas and correction parameters. The current │
   │   correction parameter corresponds to the current pressed position │
   └─────────────────────────────────────────────────────────────┘
                                    │
   ┌────────────────────────────────▼────────────────────────────┐
   │ correcting the calculated current pressure according to the current │  ⟋ 409
   │                    correction parameter                        │
   └─────────────────────────────────────────────────────────────┘
                                    │
                          ┌─────────▼───────────┐
                          │         End         │
                          └─────────────────────┘
```

Fig. 4

Fig. 5

Fig. 6

Fig. 7a

Fig. 7b

Fig. 8a

Fig. 8b

Fig. 8c

**Fig. 9a**

**Fig. 9b**

| Touchscreen | |
|---|---|
| LCD stack 1 | |
| Vcom ITO layer | |
| LCD stack 2 | |
| Backlight component | |
| Reflective film | |
| Air gap | C1 |
| Sensor | |
| OCA adhesive | C2 |
| LCM metal back-frame | |

Adhesive

**Fig. 9c**

| Touchscreen |
|---|
| OCA  adhesive |
| Sensor |
| OCA  adhesive |
| Display unit  (TFT-LCD/OLED) |
| Foam |
| Air gap |
| Metal middle frame |

Adhesive

**Fig. 9d**

$d_0$ $C_2 = C_{20}$

## Fig. 10a

F

$\Delta d$

$$C_2 = C_{20} \frac{d_0}{d_0 - \Delta d}$$

## Fig. 10b

<table>
<tr><td colspan="2" align="center">**INTERNATIONAL SEARCH REPORT**</td><td>International application No.<br>PCT/CN2016/099158</td></tr>
</table>

**A. CLASSIFICATION OF SUBJECT MATTER**

G06F 3/044 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: 压力, 检测, 触控, 触摸, 参数, 变化, 计算, 电容, pressure, measure, touch, parameter, change, account, capacitance

**C. DOCUMENTS CONSIDERED TO BE RELEVANT**

| Category* | Citation of document, with indication, where appropriate, of the relevant passages | Relevant to claim No. |
|---|---|---|
| Y | CN 103970383 A (SHANGHAI HAIER INTEGRATED CIRCUIT CO., LTD.), 06 August 2014 (06.08.2014), description, paragraphs 19-37 | 1-17 |
| Y | CN 103425331 A (SIEMENS AG), 04 December 2013 (04.12.2013), description, paragraphs 64-70, and figure 5 | 1-17 |
| A | US 2014009433 A1 (E INK HOLDINGS INC.), 09 January 2014 (09.01.2014), entire document | 1-17 |
| A | CN 105930698 A (MEIZU TECHNOLOGY CO., LTD.), 07 September 2016 (07.09.2016), entire document | 1-17 |
| A | CN 104317466 A (SHENZHEN GOODIX TECHNOLOGY CO., LTD.), 28 January 2015 (28.01.2015), entire document | 1-17 |

☐ Further documents are listed in the continuation of Box C.     ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 May 2017 | 20 June 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHAO, Tianqi<br><br>Telephone No. (86-10) 61648112 |

Form PCT/ISA/210 (second sheet) (July 2009)

## INTERNATIONAL SEARCH REPORT
### Information on patent family members

| | International application No. |
|---|---|
| | PCT/CN2016/099158 |

| Patent Documents referred in the Report | Publication Date | Patent Family | Publication Date |
|---|---|---|---|
| CN 103970383 A | 06 August 2014 | None | |
| CN 103425331 A | 04 December 2013 | EP 2787406 A2 | 08 October 2014 |
| | | EP 2664971 A1 | 20 November 2013 |
| | | DE 102013207143 A1 | 21 November 2013 |
| | | US 2013307799 A1 | 21 November 2013 |
| US 2014009433 A1 | 09 January 2014 | CN 103530005 A | 22 January 2014 |
| | | TW 201403429 A | 16 January 2014 |
| CN 105930698 A | 07 September 2016 | None | |
| CN 104317466 A | 28 January 2015 | WO 2016065712 A1 | 06 May 2016 |

Form PCT/ISA/210 (patent family annex) (July 2009)